# EUROPEAN PATENT SPECIFICATION

(11) **EP 3 888 414 B1**
(45) Date of publication and mention of the grant of the patent: **02.09.2026**
(21) Application number: 19809405.4
(22) Date of filing: 20.11.2019
(51) Int. Cl.: H04W 76/28, H04W 4/70, H04W 4/80

(54) **SPECTRUM ACCESS RESTRICTION AND RE-ALLOCATION OF TRANSMIT TIME RESOURCES**
SPEKTRENZUGANGSBESCHRÄNKUNG UND NEUZUTEILUNG VON SENDEZEITRESSOURCEN
RESTRICTION D'ACCÈS AU SPECTRE ET RÉ-ATTRIBUTION DE RESSOURCES DE TEMPS DE TRANSMISSION

(30) Priority: 30.11.2018 SE 1830350
(43) Date of publication of application: 06.10.2021
(73) Proprietor: Sony Group Corporation, 108-0075 Tokyo (JP); Sony Mobile Communications AB, 221 88 Lund (SE)
(72) Inventor: AGARDH, Kåre, 257 32 Rydebäck (SE); LJUNG, Rickard, 256 56 Helsingborg (SE); ZANDER, Olof, 247 92 Södra Sandby (SE); BENGTSSON, Erik, 241 35 Eslöv (SE)
(74) Representative: Kraus & Lederer PartGmbB
(86) International application number: PCT/EP2019/081880
(87) International publication number: WO 2020/109099

(56) References cited:
- QUALCOMM INCORPORATED: "Congestion control for V2V", vol. RAN WG1, no. Lisbon, Portugal; 20161010 - 20161014, 1 October 2016 (2016-10-01), XP051159783, Retrieved from the Internet <URL:http://www.3gpp.org/ftp/tsg_ran/WG1_RL1/TSGR1_86b/Docs/> [retrieved on 20161001]
- ORFANOS GEORGIOS ET AL: "Efficient Power Control for MC-CDMA based W-LANs", 10 April 2005 (2005-04-10), pages 1 - 7, XP002720943, ISBN: 978-3-8007-2886-2, Retrieved from the Internet <URL:http://ieeexplore.ieee.org/xpls/abs_all.jsp?arnumber=5755314&tag=1> [retrieved on 20140226]

## Description

### TECHNICAL FIELD

Various examples generally relate to communication using transmit time resources from a budget associated with a spectrum access restriction. Various examples specifically relate to fully or partially re-allocating transmit time resources from a second node to a first node.

### BACKGROUND

Wireless communication is widespread. The number of wireless communication devices (sometimes also referred to as mobile devices or user equipment, UE) is expected to further grow, e.g., as part of a trend referred to as Internet of Things (IOT). However, resources on the electromagnetic spectrum are limited. Thus, there can be a scenario in which nodes accessing the spectrum compete for access to the spectrum. To mitigate this issue, it has been proposed to also allow access to an open/unlicensed spectrum.

Third Generation Partnership Project (3GPP) DRAFT; R1-1609960 relates to a decentralized congestion control mechanism for vehicle-to-vehicle. A channel busy ratio can be defined as the ratio of radio resources that were deemed busy.

Orfanos, Georgios, Joerg Habetha, and Willi Butsch. "Efficient Power Control for MC-CDMA based W-LANs." 11th European Wireless Conference 2005-Next Generation wireless and Mobile Communications and Services. VDE, 2005 relates to an efficient power control for MC-CDMA-based W-LANs. An algorithm is based on a RTS-CTS-Data-ACK packet transfer cycle. A station S1 transmits an RTS frame including a transmit power of station S1 and a mean interference estimate of S1. The RTS frame is received at station S2 with a receive power, and S2 can calculate the path loss between S1 and S2 based on the power values. In response, station S2 transmits a CTS frame including a transmit power of station S2 and a mean interference estimate. When communicating on an open spectrum, a central scheduling service applicable to all nodes accessing the spectrum is not employed; but rather each individual node follows certain regulations that impose restrictions on the spectrum access. One example of such spectrum access restrictions relates to a duty cycle (DC) restriction, e.g., each individual node may not transmit for more than, e.g., 0.1% or 1% or 10% of the time, employing a sliding window approach where the window size is, e.g., one hour long.

In such a situation with an imposed DC restriction, a balance of a budget of transmit time resources (TTRs) associated with the DC restriction can run low. Then, if further data is queued for transmission, a situation can occur where the transmission of the data needs to be postponed until the balance of the budget has recuperated. This can increase a latency in the data transmission. Under certain use cases, such latency can be undesirable, e.g., in view of time-sensitive data, etc..

### SUMMARY

A need exists for advanced techniques of communicating in view of spectrum access restrictions. Specifically, a need exists for advanced techniques which overcome or mitigate at least some of the above-identified restrictions and drawbacks.

This need is met by the features of the independent claims. The features of the dependent claims define embodiments.

A method of operating a first node according to claim 1 includes, in particular, transmitting on a communication link using transmit time resources from a resource budget associated with a spectrum access restriction imposed on a second node.

A first node according to claim 12 includes a control circuitry configured, in particular, to transmit on a communication link using transmit time resources from a resource budget associated with a spectrum access restriction imposed on a second node.

A method of operating a second node according to claim 11 includes, in particular, transmitting, to a first node, a signal indicative of a partitioning of a resource budget associated with a spectrum access restriction imposed on the second node.

A second node according to claim 13 includes control circuitry configured, in particular, to transmit, to a first node, a signal indicative of a partitioning of a resource budget associated with a spectrum access restriction imposed on the second node.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates nodes and communication links between the nodes according to various examples.
FIG. 2 schematically illustrates a node according to various examples.
FIG. 3 schematically illustrates TTRs and a balance of a budget of an associated DC restriction according to various examples.
FIG. 4 is a flowchart of a method according to various examples.
FIG. 5 is a flowchart of a method according to various examples.
FIG. 6 is a signalling diagram of communication between an AP and a UE and re-allocation of at least a part of a resource budget according to various examples.
FIG. 7 is a signalling diagram of communication between an AP and a UE and re-allocation of at least a part of a resource budget according to various examples.
FIG. 8 is a signalling diagram of communication between an AP and a UE and re-allocation of at least a part of a resource budget according to various examples.
FIG. 9 is a signalling diagram of communication between an AP and a UE and re-allocation of at least a part of a resource budget according to various examples.
FIG. 10 is a signalling diagram of communication between an AP and a UE and re-allocation of at least a part of a resource budget according to various examples.
FIG. 11 is a signalling diagram of communication between an AP and a UE and re-allocation of at least a part of a resource budget according to various examples.
FIG. 12 schematically illustrates updating a balance of a resource budget according to various examples.

### DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques are described which facilitate communication between a first node and a second node in view of spectrum access restrictions. Generally speaking, a spectrum access restriction can be implemented in terms of TTRs. Each node may have a budget of TTRs that is determined based on the spectrum access restriction. Then, when the node transmits using TTRs, the balance of the budget is reduced. The balance shall not fall below zero, to avoid violation of the spectrum access restriction.

As a general rule, various kinds and types of spectrum access restrictions may be used in connection with the techniques described herein. For example, the spectrum access restriction may impose a certain limitation on a maximum contiguous spectrum access time. Thus, a given node may not be allowed to access the spectrum for longer than a certain time duration, e.g., without intermission. A further example spectrum access restriction is a so-called DC restriction. For example, a typical DC restriction may specify a certain time fraction per reference time interval that may be used by a node for transmitting on the spectrum. For example, a typical duration of the reference time interval can be in the order of minutes or hours. For example, a typical time fraction can be in the order of 0.1% to 10%.

Typically, each node is imposed with a respective spectrum access restriction. For example, the first node may be imposed with a first spectrum access restriction and the second node may be imposed with a second spectrum access restriction. If the first node transmits a signal on the spectrum, a respective balance of the budget associated with the first spectrum access restriction is reduced and TTRs from the budget are used. Over time, the balance can recuperate if the first node refrains from transmitting.

A node having an imposed spectrum access restriction may refer to a scenario in which a predefined ruleset etc. requires the node to communicate using a limited budget of TTRs. The budget may be initially allocated (pre-allocated) to the respective node.

For sake of simplicity, hereinafter, reference is primarily made to an implementation of the spectrum access restriction as a DC restriction, but the techniques described hereinafter are not limited thereto.

The examples described herein may be combined with communication on an open spectrum. Here, a central scheduling service may not be available. In some examples, each node attempting to access the spectrum may have to employ a listen-before-talk (LBT) procedure. Here, channel sensing may be employed to determine an average power on the spectrum; if the average power exceeds a threshold, the node attempting to access the spectrum may postpone transmission by a back-off time duration. This contrasts with a regulated spectrum where the central scheduling service is a centralized authority that proactively distributes resources to the various participating nodes. As a general rule, using LBT procedures is optional.

Various techniques described herein relate to a scenario in which multiple nodes accessing a spectrum form a network. In other words, the multiple nodes can communicate with each other using predefined rules. The multiple nodes can exchange data. For example, the network may include one or more access points (APs). The network may include one or more UEs. The one or more APs may provide the one or more UEs with access to one or more data networks such as packet networks or even circuit-switched telecommunication networks.

For example, one or more communication links can be formed between the nodes accessing the spectrum. A communication link can include one or more frequency bands; carrier aggregation could be employed. A communication link can implement one or more channels, e.g., a random-access channel, a payload channel, and a control channel. A communication link can be characterized with one or more transmit properties such as transmit power, modulation scheme, coding scheme, coverage extension repetition level, data rate, etc.. Different communication links can employ the same or different protocols. It is generally not required that all communication links operate according to the same protocol. For example, a first communication link may operate according to the Third Generation Partnership Project (3GPP) Long Term Evolution (LTE) protocol, while a second communication link may operate according to the 3GPP New Radio (NR) protocol. Further example protocols include: Bluetooth, Wi-Fi, etc. For example, the protocols of the various communication links can differ with respect to at least one of carrier frequency, modulation scheme, and coding scheme. Device-to-device (D2D) communication, sometimes also referred to as sidelink communication, may be employed. Furthermore, it is possible that one or more of the communication links are not associated with a DC restriction.

Various techniques described herein are based on the finding that in some scenarios one or more of the nodes accessing the spectrum may have an insufficient balance of the budget associated with the respective spectrum restriction. For example, there may be more data queued for transmission then can be accommodated by the balance: there is a risk that the budget is overdrawn. Such scenarios may be particularly applicable for APs. The reason for this is that APs typically must communicate with many UEs such that the overall amount of TTRs required by an AP can be comparably large. In one example, the AP may request UEs to transmit large amounts of downlink (DL) data, to be received. Then, a so-called "greedy" situation may result: there may be no penalty or restriction configured in the DC restriction to avoid excessive DL traffic. This can congest the spectrum. Various examples described herein facilitate mitigation of such an insufficient balance associated with the spectrum access restriction. Further, various examples described herein avoid a greedy behavior of an AP-UE communication system.

According to various examples, TTRs from a budget associated with a spectrum access restriction - e.g., a DC restriction - imposed on a second node are partly or fully reallocated. Such re-allocation can be from the second node to a first node. In other words, according to various examples, it may be possible to share the TTRs between the first node and the second node. For example, a corresponding agreement can be negotiated between the first node and the second node using respective control signaling. Then, the first node can transmit on a communication link using the TTRs from the resource budget associated with the spectrum access restriction imposed on the second node.

In this regard, multiple nodes having one or more communication links can be looked upon as a system: TTRs of a budget associated with a spectrum access restriction imposed on one of the multiple nodes may be used by multiple nodes.

To give a respective example: it would be possible that an AP having imposed thereon a first DC restriction broadcasts, to one or more UEs, that the AP would like to obtain at least a share of the TTRs from one or more resource budgets of second DC restrictions imposed on the one or more UEs. Thereby, the AP can extend its own budget by at least a part of the budgets associated with the second DC restrictions UE. Respective control signaling can be implemented between the AP in the one or more UEs.

As a general rule, a first node using TTRs from a resource budget associated with a DC restriction imposed on a second node can correspond to: the first node using these TTRs for transmitting on a communication link that is between the first node and the second node. For example, this may be a reciprocal communication link in which radio parameters for communicating from the first node to the second node are approximately equal to radio parameters for communicating from the second node to the first node. In another example, it would also be possible that the first node uses the TTRs from the resource budget associated with the DC restriction imposed on the second node on a communication link that is between the first node and a third node, the third node being different from the second node.

In the examples described herein, management of a resource budget can be delegated between nodes. The management of a resource budget can specifically be delegated along with re-allocating TTRs. Management of the resource budget can include updating a balance of the resource budget. Here, used TTRs may be counted.

In the examples described herein, it would be possible to apply a non-proportional scaling when updating the balance of the resource budget. Thereby, a penalty can be applied to TTRs that are re-allocated.

A penalty may be specifically applied in scenarios when a resource budget is managed by more than a single node, e.g., to avoid unintentional overdrawing of the budget. For example, it would be possible that the penalty is selectively applied depending on whether more than a single node manages the budget. For instance, if only a single node manages the budget, the penalty may not be applied.

In some examples, it is possible that a node reduces or increases a counting rate of TTRs when updating the balance of the resource budget. A node can even fully delegate the management of the resource budget and stop counting TTRs. The node could later on re-active updating the balance.

A node could be instructed to stop transmitting using TTRs from a re-allocated resource budget, to avoid overdrawing the budget.

Management of a re-allocated budget can be facilitated by use of a dedicated grant signal for TTRs from the re-allocated budget from one node to another node.

Management of a re-allocated budget can be facilitated by a node monitoring transmission of another node using TTRs from the re-allocated budget.

In the examples described herein, use of TTRs can be limited, e.g., to one or more selected communication links, using one or more selected channels (e.g., random access, hybrid ARQ ack/nack transmissions, power control commands or the like), and/or using one or more transmit properties (such as coding scheme, coverage extension level, modulation scheme, etc..).

Re-allocated TTRs can be used on a communication link towards another device that is different from the device having imposed thereon the DC restriction associated with the respective resource budget from which the TTRs are obtained.

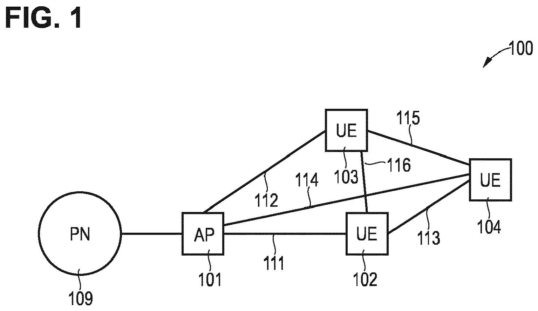

FIG. 1 schematically illustrates aspects with respect to multiple wireless communication links 111-116 formed between multiple nodes 101-104.

In the example of FIG. 1, the nodes 101-104 form a network 100. There is an AP 101 and UEs 102-104. Since the nodes 101-104 access an open spectrum, the AP 101 does not provide a scheduling functionality to the UEs 102-104, at least when communicating on the open spectrum. In the example of FIG. 1, the AP 101 provides access to a packet network 109 by means of a backbone connection.

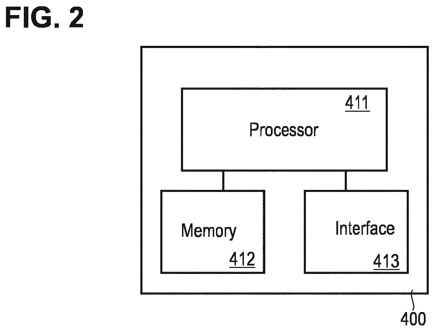

FIG. 2 schematically illustrates a node 400. For example, the node 400 as illustrated in FIG. 2 could implement the AP 101 or any one of the UEs 102-104 of FIG. 1.

The node 400 includes a processor 411, e.g., a central processing unit or a graphics processing unit or a field-programmable gated array or an application-specific integrated circuit. The node 400 also includes a memory 412. For instance, the memory 412 may include a volatile part and a non-volatile part. For example, the memory 412 may include a random access memory and a flash memory, or the like. The memory 412 can store program code that can be loaded and executed by the processor 411. As such, the processor 411 and the memory 412 can implement a control circuitry. The node 400 also includes an interface 413. The interface 413 can be a wireless interface and may include an analog front end and a digital front end. The interface 413 may include one or more antennas. Using the interface 413, transmitting and/or receiving (communicating) on a wireless communication link is possible.

When the processor 411 executes the program code stored in the memory 412, it can perform one or more of the following functions: re-allocating TTRs; re-allocating a budget associated with a DC restriction; sharing TTRs from a single budget; transmitting using TTRs from a budget associated with a DC restriction imposed on the node 400 and/or using TTRs from a further budget associated with a further DC restriction imposed on a further node; exchanging a status signal indicative of a balance of the further budget; managing the budget and/or managing the further budget; updating a balance of a budget applying a scaling factor, e.g., defining a penalty; etc..

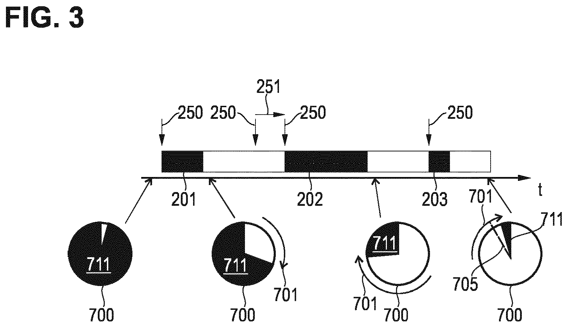

FIG. 3 schematically illustrates aspects with respect to spectrum access by the AP 101. While FIG. 3 illustrates spectrum access by the AP 101, similar techniques may also be applied for spectrum access by any one of the UEs 102-104 or any other node communicating on a spectrum, e.g., an open spectrum.

FIG. 3, top, illustrates transmission intervals 201-203 during which the AP 101 accesses the spectrum. As illustrated in FIG. 3, the AP 101 does not access the spectrum contiguously. This restriction on the spectrum access is due to a DC restriction imposed on the AP 101.

Each time before accessing the spectrum, the AP 101 may, e.g., according to access regulations on the open spectrum need to perform an LBT procedure 250. Performing the LBT procedure 250 is generally optional. The purpose of the LBT process 250 is to avoid collision between two nodes 101-104 attempting to access the spectrum contemporaneously. For the transmission intervals 201-203, the respective LBT procedure 250 succeed (otherwise the AP 101 would not transmit). For example, a respective spectral power density may remain below a predefined threshold. There is one LBT procedure 250 illustrated in FIG. 3, in-between the transmission intervals 201, 202, that fails. The failing LBT procedure 250 triggers a back-off time duration 251 after which a subsequent LBT procedure 250 is performed. The LBT procedure 250 is generally optional.

FIG. 3 also illustrates aspects with respect to a budget 700 associated with the DC restriction. The AP 101 manages the budget 700. For example, this involves counting the use of TTRs during the transmission intervals 201-203 to update a balance 711 of the budget 700. This also includes monitoring that the balance 711 of the budget 700 does not reach zero or fall below zero.

In the example of FIG. 3, a pie chart is used to graphically illustrate the balance 711 of the budget 700. In the pie chart, the black part is associated with available, un-used TTRs - corresponding to the available balance 711; while the white part is associated with non-available, already used TTRs.

In FIG. 3, four instances of the pie chart illustrating the budget 700 are shown, for four different points in time. Initially, the balance 711 is high, i.e., they are many available TTRs. Then, for each of the transmission time interval 201-203, the balance 711 is reduced, i.e., a certain part 701 of the budget 700 is used for implementing the respective transmission intervals 201-203. The part 701 correlates with the amount of used TTRs. Such mapping of used and un-used TTRs to a balance of a budget is an example implementation. There are various other mappings available and the techniques described herein may be modified accordingly.

As a general rule, it is possible that depending on the transmit property - e.g., coding scheme, coverage extension repetition level, modulation scheme, frequency, forward error correction, and/or transmit power - the same amount of data requires more or fewer TTRs.

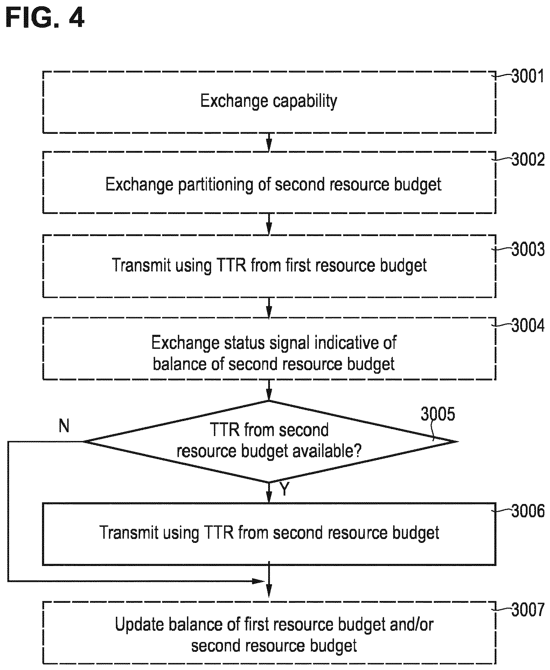

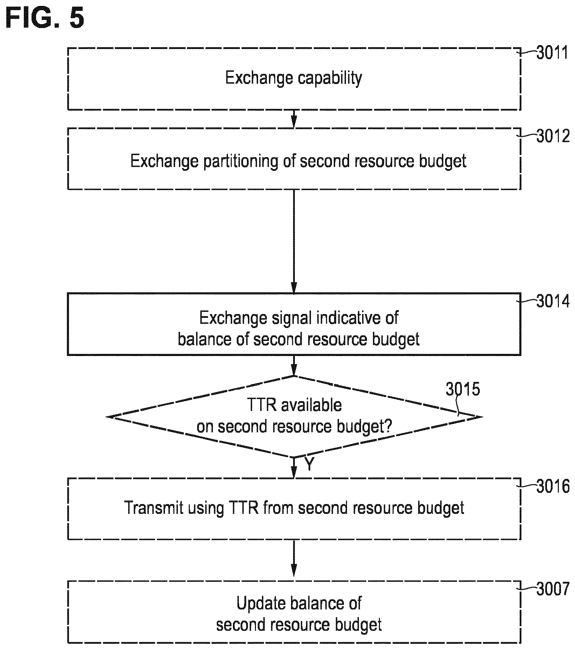

As illustrated in FIG. 3, the balance 711 eventually falls below a threshold 705. Then, according to reference implementations, the AP 101 may refrain from further spectrum access for a certain time duration until the balance 711 has recuperated. Hereinafter, techniques are described that overcome or mitigate such a delay in transmission. Example methods are described in connection with FIG. 4 and FIG. 5.

FIG. 4 is a flowchart of a method according to various examples.

The method of FIG. 4 can be executed by a first node. The first node may be a transmitting node. For example, the first node may be configured as the node 400 in FIG. 2; as such, the method of FIG. 4 may be executed by the processor 411 and the memory 412 of the node 400 as illustrated in FIG. 2.

Specifically, it would be possible that the method of FIG. 4 is executed by the AP 101 of the network 100 as illustrated in FIG. 1.

The method starts with block 3001. In optional block 3001, a capability to partly or fully re-allocate a resource budget associated with a DC restriction imposed on a second node from the second node to the first node is exchanged. The capability is exchanged between the first node and the second node.

Re-allocating a resource budget can generally refer to allowing one or more first nodes transmitting using TTRs from the resource budget, even though the resource budget is associated with a DC restriction imposed on a second node. If the resource budget is fully re-allocated, the second node is not allowed to transmit using TTRs from the resource budget, anymore.

Because the resource budget is associated with the DC restriction imposed on the second node, it is hereinafter labelled second resource budget. There may also be a first resource budget associated with a DC restriction imposed on the first node.

As a general rule, exchanging information and/or signals between the first node and the second node can include the first node transmitting one or more control signals to the second node and/or the second node receiving one or more control signals from the first node and/or the second node transmitting one or more control signals to the first node and/or the first node receiving one or more control signals.

For example, the first node could transmit a capability request signal to the second node and the second node could answer with a capability response signal that is indicative of its capability to at least partly re-allocate the second resource budget.

It would be possible that one or more parameters of the re-allocation are identified in the capability request signal and/or the capability response signal.

Next, in non-optional block 3002, a partitioning of the second resource budget associated with the DC restriction imposed on the second node is exchanged between the first node and the second node. The partitioning can correspond to an a-priori breakdown of the second resource budget into a first part from which the first node can use TTRs and into a second part from which the second node can use TTRs. It would be possible that the first node then manages the first part of the partitioning upon the second node delegating the management of the first part; while the second node manages the second part of the partitioning. Here, each one of the first node and the second node can take care not to overdraw TTRs from their respective part of the partitioned second resource budget For example, the first node may not transmit using TTRs from the first part of the partitioning overdrawing the respective balance.

Such a scenario using a partitioned second resource budget has the advantage of not having to frequently exchange status signals that are indicative of the balance of the overall budget - because each node manages its own part of the partitioned budget. On the other hand, the partitioning may be somewhat (semi-)static such that flexible adaptation to a current need of TTRs may be less flexible.

At non-optional block 3003, the first node transmits using TTRs from the first resource budget. Hence, the first node may select between using the TTRs from the first resource budget or from the second resource budget. Thus, by at least partly re-allocating the second resource budget from the second node to the first node, the first node can effectively extend its overall resource budget.

At optional block 3004, a status signal indicative of the balance of the second resource budget is exchanged between the first node and the second node. Such exchange of the status signal may not be required in scenarios in which a fixed partitioning of the second resource budget is relied upon, as explained in connection with block 3002 (but may be anyway used, e.g., indicative of the balance of the respective part). On the other hand, in scenarios where the first node manages the entire second resource budget or where the second node manages the entire second resource budget, the status signal may be helpful to synchronize knowledge on the remaining balance of the second resource budget between the first node and the second node - thereby making sure that the second resource budget is not overdrawn.

For example, in a scenario in which the first node manages the second resource budget, it would be possible that the first node transmits the status signal to the second node. The second node can then receive the status signal. The first node may transmit the status signal repeatedly, according to a timing schedule or upon request; thereby an up-to-date information on the balance may be provided. In another example, the first node may transmit the status signal event-driven. For instance, the status signal may be indicative of a transmission grant for further TTRs. Thus, the transmission grant may be provided on-demand, e.g., upon request etc.. The transmission grant is at least implicitly indicative of the balance not running so low that the further TTRs could not be used.

For example, the transmission grant could be indicative of one or more channels - e.g., random access or sidelink, etc.. - or transmit properties for which a grant to use the transmit type resources from the second resource budget provided. For example, the transmission grant could be indicative of an amount of TTRs. By such techniques, it can be ensured that the balance of the second resource budget is not overdrawn by using too many TTRs.

Alternatively or in additionally, it would also be possible that a more passive scheme is employed. Here, the first node - managing the second resource budget- could monitor transmission of the second node using further TTRs from the second resource budget. The first node may transmit using the further TTRs until further notice - even though it has delegated management to the first node. Then, e.g., under certain conditions, the first node may again transmit the status signal indicative of the balance of the resource budget. For example, it would be possible that the first node transmits the status signal once the balance of the second resource budget runs low. Then, the first node may request the second node, by means of the status signal, to pause or halt or suspense transmitting using TTRs from the second resource budget. For example, the status signal could then be indicative of at least one of a suspension or a back-off time duration for transmission of the second node using the further TTRs from the second resource budget. As such, the status signal may be labeled a stop signal.

As a general rule, in connection with such techniques in which the first node manages the second resource budget associated with the DC restriction imposed on the second node, the first node could transmit, to the second node, one or more transmit properties for the transmission of the second node using the further TTRs. By indicating allowed or non-allowed transmit properties, it becomes possible to estimate an amount of TTRs from the second resource budget employed by the second node to transmit data. Specifically, as already mentioned above, the amount of TTRs per data unit can vary depending on one or more transmit properties. Such techniques also apply where the second node retains management of the second resource budget; then, the second node can transmit, to the first node, one or more transmit properties for the transmission of the first node using the TTRs from the second resource budget.

Above, various scenarios have been explained in which exchanging the status signal indicative of the balance of the second resource budget includes the first node transmitting the status signal to the second node. This is typically associated with the first node managing the second resource budget, on behalf of the second node. Other scenarios are conceivable in which the second node does not delegate management of the second resource budget to the first node; here, the second node may retain in charge of the management of the second resource budget. Specifically in such scenarios it would be possible that exchanging the status signal in block 3004 includes the first node receiving the status signal from the second node.

For example, the first node and the second node may have a synchronized timing of communication of the status signal. Then, the first node may receive the status signal in accordance with that timing. Thereby, the first node may have an up-to-date knowledge on the balance. The first node may take care not to overdraw the balance.

In a further example, it would be possible that the first node receives a transmission grant for the TTRs from the second resource budget. This can be based on the second node managing the second resource budget. For example, it would be possible that the first node initially transmits a request and the transmission grant is then associated with the request. For example, the request could be transmitted upon data arriving in a transmit buffer at the first node. For example, the request could be transmitted based on managing the first resource budget. For example, the first node identifies that there is more data queued for transmission in the transmit buffer than available TTRs in the first resource budget, the first node may transmit the request.

Again, it would be possible that the transmission grant is indicative of one or more channels and/or one or more transmit properties and/or an amount of the TTRs for which the transmission using the TTRs is granted to the first node by the second node. Alternatively or additionally, such information may also be included in the request.

It would also be possible that the transmission grant is indicative of whether the transmission grant can be forwarded to a third node that is different from the second node. Hence, the transmission grant can be indicative of whether it is allowed to the first node lend or forward the TTRs to the third node. It would also be possible that the transmission grant is indicative of whether the TTRs can be used for communicating between the first node and a third node (or whether the TTRs can only be used for communicating between the first node and the second node).

Then, in any case, the first node can check at block 3005 whether TTRs are available. In short, this can be based on the first node managing a respective part of a partitioning of the second resource budget (as explained in connection with block 3002 above); or based on the first node managing the overall second resource budget (as explained in connection with block 3004 above); or based on the first node receiving a status signal indicative of a balance of the second resource budget such as a transmission grant from the second node managing the overall second resource budget, such as a transmission grant (as explained in connection with block 3004 above).

If it is judged in block 3005 that TTRs from the second resource budget are available, then the first node transmits on a communication link using the available TTRs from the second resource budget, block 3006.

As a general rule, the communication link can be between the first node of the second node. It would also be possible that the communication link is between the first node and a third node.

As a further general rule, it would be possible that the communication link is reciprocal or non-reciprocal. For example, partly or fully re-allocating TTRs from the second node to the first node may be applicable, in particular, in scenarios in which the radio conditions at the first node transmitting to the second node are comparable to the radio conditions at the second node transmitting to the first node. This is based on the finding that in such a reciprocal communication link scenario, it would be easy to assess an amount of TTRs required to transmit the data unit for the particular node managing the resource budget under the assumption of reciprocity. For instance, it would be possible that the first node (and/or the second node) checks reciprocity of the communication link based on transmission of one or more pilot signals. For instance, receive properties of pilot signals transmitted from the first node to the second node could be compared with receive properties of pilot signals transmitted from the second node to the first node. Then, the re-allocation of the second resource budget may be selectively activated depending on the reciprocity. Further, since radio propagation characteristics typically are frequency dependent, as one example a node may consider a communication link to be reciprocal in case the wireless communication protocol is operating in a Time Division Duplex (TDD) manner, meaning that the same frequency range is utilized for the transmissions from the first node to the second node as for the transmissions from the second node to the first node. As a further example a node may consider the communication link to be non-reciprocal if the communication protocol is operating in a Frequency Division Duplex (FDD) manner, where the frequency in the two transmission directions between the two nodes are different.

A further option would be to use paired frequency bands for the communication from the first node to the second node and vice versa.

Next, at optional block 3007 the balance of the first resource budget and/or the balance of the second resource budget is updated, based on the TTRs used for transmitting at block 3003 and/or used for transmitting at block 3006. This can include counting the used TTRs.

For example, if the first node uses TTRs from the first resource budget - natively associated with the first node - e.g., based on spectrum access regulations -, i.e., imposed on the first node - then, the first node may lower the balance of the first resource budget in a proportional manner. For example, if the DC restriction imposed on the first node specifies that in a reference time window of 1 minute a count of 10 TTRs may be used, and the first node uses for transmitting, at block 3003, 3 TTRs from the first resource budget, then the balance may be reduced by 3 increments (arbitrary units).

According to some examples, it would be possible that a resource budget is updated in case of transmission using re-allocated TTRs. For example, a scaling factor could be applied. The scaling factor can be different from one. For example, if the first node uses TTRs from the second resource budget - natively associated with the second node, i.e., imposed on the second node - then, the node managing the second resource budget or the respective part of a partition of the second resource budget may lower the balance of the second resource budget in a scaled manner. Specifically, a scaling may be applied to the balance of the second resource budget when the first node uses the TTRs from the second resource budget. For example, if the DC restriction imposed on the second node specifies that in a reference time window of 1 minute a count of 10 TTRs may be used, and the first node uses for transmitting, at block 3006, 3 TTRs from the second resource budget, then the balance may be reduced by a number of increments other than 3 (scaling factor equal 1), e.g., by one or 2 (scaling factor smaller 1) or even by 4 or 5 (scaling factor larger than 1) etc. (arbitrary units). Where the balance is reduced in a scaled manner in view of the actually used TTRs, this corresponds to a penalty to the balance.

For example, the scaling factor could depend on at least one of: a count of nodes using the TTRs from the second resource budget, e.g., how many nodes are benefiting from re-allocation of the TTRs from the second resource budget; a distance between the first node and the second node; and a mobility of a least one of the first node and the second node.

Such techniques of scaling are based on the finding that equality in the spectrum access can suffer if re-allocation of TTRs between nodes is extensively employed. For example, considering a scenario where the first node and the second node are arranged at a large distance: here, different spatial regions will be occupied based on one and the same DC restriction imposed on a single node. In conventional techniques TTRs from a resource budget associated with a DC restriction imposed on a single node could lead to occupation of the spectrum in different spatial regions. Similar considerations also apply for a high/low mobility of the respective nodes. By using scaling, spectrum access equality can be supported.

FIG. 5 is a flowchart of a method according to various examples. Optional blocks are illustrated with dashed lines in FIG. 5. The method of FIG. 5 can be executed by a second node. The second node may be a transmitting node. For example, the second node may be configured as the node 400 in FIG. 2; as such, the method of FIG. 5 may be executed by the processor 411 and the memory 412 of the node 400 is illustrated in FIG. 2. Specifically, it would be possible that the method of FIG. 5 is executed by the UE 102 of the network 100 as illustrated in FIG. 1.

The method of FIG. 5 is inter-related to the method of FIG. 4.

As a general rule, the second node may retain or delegate management of the second resource budget associated with the DC restriction imposed on the second node. Depending on where the management of the second resource budget takes place, the second node may transmit or receive a status signal indicative of the balance of the second resource budget.

Block 3011 is interrelated to block 3001, a capability to partly or fully re-allocate a resource budget associated with a DC restriction imposed on a second node from the second node to the first node is exchanged.

Block 3012 is interrelated to block 3002; here partitioning of the resource budget associated with the DC restriction imposed on the second node is communicated.

Block 3014 is interrelated to block 3004; here, a signal indicative of the resource budget is exchanged.

Block 3015 corresponds to block 3005. The second node makes a check if the balance of the resource budget of the DC restriction imposed on the second node is sufficiently high. If yes, the method commences with block 3016.

Block 3016 corresponds to block 3006. At block 3016 the second node transmits using TTRs from its own resource budget.

Block 3017 corresponds to block 3007. For instance, there may be scenarios in which the second node has delegated management of the second resource budget to the first node. Here, as part of block 3014, the second node may receive, from the first node, the status signal indicative of the balance of the second resource budget. The status signal can be based on the first node managing the second resource budget. For example, the status signal may be indicative of the transmission grant, as already explained in connection with block 3004 above. Then, in block 3016, the second node can transmit using the TTRs based on the transmission grant. Because the first node manages the second resource budget, there is no need for the second node to execute block 3017 in such a scenario.

In an alternative scenario, the second node may not delegate management of the second resource budget to the first node. Here, as part of block 3014, the second node can transmit the status signal indicative of the balance to the first node. For example, the status signal could be indicative of the transmission grant so that the first node can transmit using TTRs from the second resource budget. In such a scenario, the second node can update the balance of the second resource budget in block 3007 based on the TTRs subject to the transmission grant transmitted at block 3014 and optionally also based on the TTRs used in block 3016. With respect to the TTRs re-allocated to the first node in block 3014, it would be again possible to apply a scaling when updating the balance of the second resource budget in block 3017.

Alternatively to or in addition to using the transmission grant, a more passive approach may be taken in which the second node monitors transmission of the first node using TTRs from the second resource budget. The second node may manage the second resource budget based on said monitoring. Here, the second node may transmit the status signal indicative of the balance based on said monitoring. For example, it would be possible that the second node transmits the status signal once the balance of the second resource budget runs low. Then, the second node may request the first node, by means of the status signal, to pause or halt or suspense transmitting using TTRs from the second resource budget. For example, the status signal could then be indicative of at least one of a suspension or a back-off time duration for transmission of the first node using the TTRs from the second resource budget. As such, the status signal may be labeled a stop signal.

Generally, the sequence of blocks in the scenario FIG. 5 may not be fixed. For example, where the second node transmits a transmission grant to the first node, the check of block 3015 may be executed prior to executing block 3014.

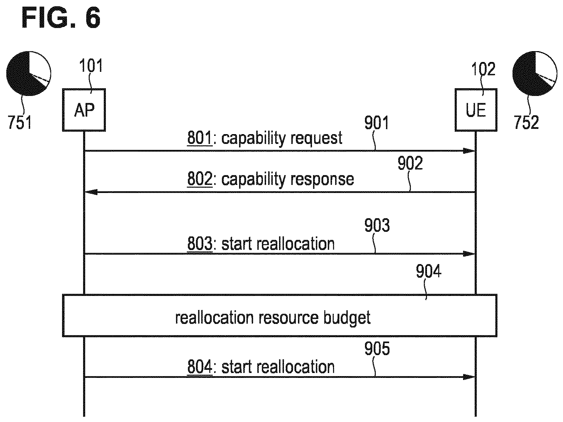

FIG. 6 is a signaling diagram of communication between the AP 101 and the UE 102. FIG. 6 illustrates aspects with respect to re-allocation of TTRs of a budget 752 of a DC restriction imposed the UE 102.

The AP 101 transmits a capability request signal 101 at 901. The UE 102 receives the capability request signal 101. For example, the AP 101 may transmit the capability request signal 101 in response to detecting that the balance of the budget 751 of the DC restriction imposed on the AP 101 runs low. The UE 102 can respond with a capability response signal 102, at 902. The capability response signal is indicative of a capability of the UE 102 to re-allocate its resource budget 752 at least partially to the AP 101.

While the AP 101 transmits the capability request signal 101 in FIG. 6, it would be possible that the UE 102 transmits the capability request signal 101.

Next, at 903, the AP 101 indicates the start re-allocation by transmitting a corresponding control signal 803. An optional confirmation signal is not illustrated in FIG. 6. The UE 102 could also be given the possibility to reject the request of the AP 101.

Then, at 904, re-allocation of the resource budget 752 is implemented. At 904, the AP 101 indicates to stop re-allocation by transmitting a corresponding control signal 804.

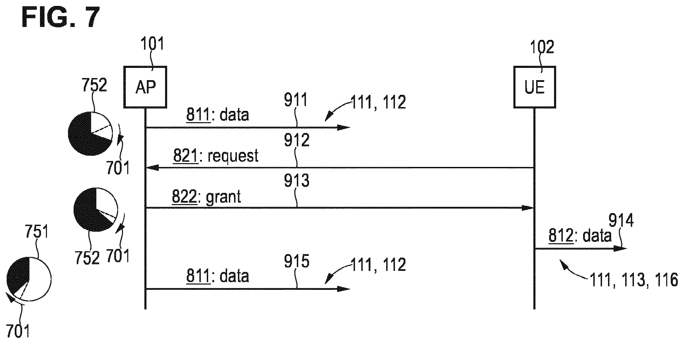

There are various options available for implementing the partial or full re-allocation of the resource budget 752 from the UE 102 to the AP 101. Some of the examples are explained in connection with the following figs. 7 to 11.

FIG. 7 is a signaling diagram of communication between the AP 101 and the UE 102. In the example of FIG. 7, the UE 102 delegates management of its resource budget 752 to the AP 101. The AP 101 manages the resource budget 752 of the DC restriction imposed on the UE 102. For example, this delegation could be negotiated or commanded as part of the control signaling in 901-903 (cf. FIG. 6).

Because the AP 101 manages the resource budget 752, the AP 101 does not need to request permission to transmit using TTRs from the resource budget 752. Accordingly, at 911, the AP 101 transmits data 811 using TTRs from the resource budget 752 associated with the DC restriction imposed on the UE 102.

For example, the communication at 911 could be on the communication link 111 or on the communication link 112, i.e., could be on the communication link 111 between the AP 101 and the UE 102 that at least partially relocates TTRs from its budget to the AP 101 or could be on the communication link 112 between the AP 101 obtaining the re-allocation of the TTRs from the resource budget 752 and the third-party UE 103.

At 912, the UE 102 transmits a request signal 821 which is received by the AP 101. The AP 101 responds by transmitting a transmission grant signal 822 at 913. The transmission grant signal 822 is for the UE 100 to transmit data 812 at 914 using TTRs from the resource budget 752. Based on the transmission grant signal 122, the AP 101 updates the balance of the budget 752. The transmission grant signal 822 thus corresponds to a status signal that is indicative of the balance of the resource budget 752.

For example, it would be possible that the transmission grant signal 822 is indicative of one or more channels or one or more transmit properties for which the transmission using the TTRs is granted to the UE 102. Thereby, it may be possible for the AP 101 to estimate the amount of TTRs used by the UE 102. It would also be possible that the transmission grant signal 822 explicitly indicates an upper threshold amount of TTRs to be used by the UE 102.

At 915, the AP 101 may optionally transmit data 811 using TTRs from its own resource budget 751

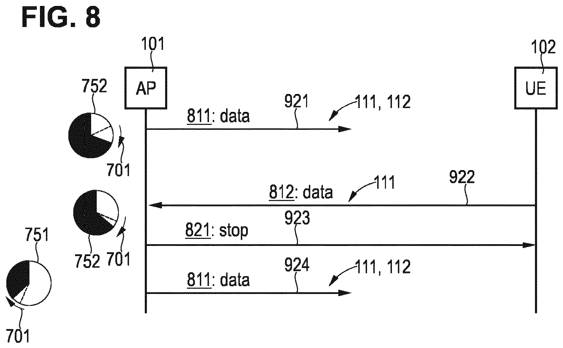

FIG. 8 is a signaling diagram of communication between the AP 101 and the UE 102. In the example of FIG. 8, the UE 102 again delegates management of its resource budget 752 to the AP 101. The AP 101 manages the resource budget 752 of the DC restriction imposed on the UE 102. For example, this delegation could be negotiated or commanded as part of the control signaling in 901-903 (cf FIG. 6).

The scenario of FIG. 8 generally corresponds to the scenario of FIG. 7. 921 corresponds to 911 and 924 corresponds to 915.

At 921, the AP 101 transmits data 811 using TTRs from the resource budget 752 associated with the DC restriction imposed on the UE 102.

However, in the scenario of FIG. 8, the UE 102 does not pre-emptively request permission to transmit using TTRs from the resource budget 752. Rather, it transmits data 812, at 922, on the communication link 111 between the UE 102 and the AP 101. The AP 101 monitors for such transmission by the UE 102 using the TTRs from the resource budget 752. Based on the reception of the data 812 at 922, the AP 101 can update the balance of the resource budget 752 accordingly. For example, if the AP 101 then wants to prevent the UE 102 to continue transmitting using TTRs from the resource budget 752, it can transmit a corresponding stop signal 822 that is indicative of at least one of a suspension or a back of time duration for transmission of the UE 102 using the TTRs from the resource budget 752, 923. The stop signal can be indicative of a low balance of the resource budget 752.

At 924, the AP 101 may optionally transmit data 811 using TTRs from its own resource budget 751.

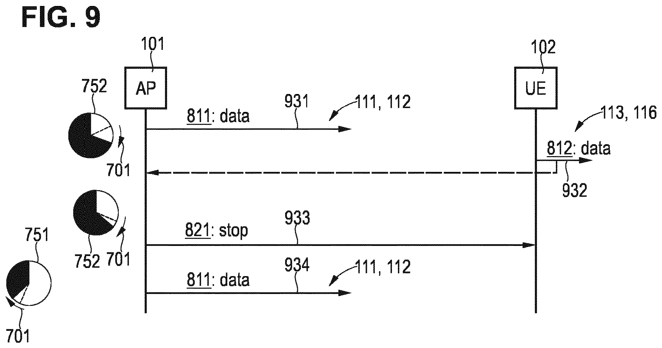

While in the scenario FIG. 8 the AP 101 monitors the transmission of the UE 101 on the communication link 111, it would also be possible that the AP 101 monitors the transmission of the UE 102 on another communication link 116, 113 (cf. FIG. 9: 932). In FIG. 9, 931 corresponds to 921, 933 corresponds to 923, and 934 corresponds to 924.

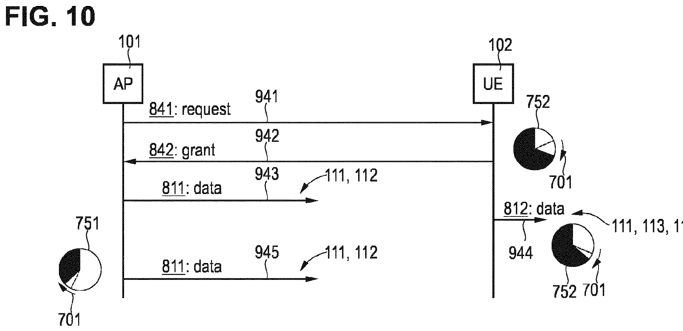

FIG. 10 is a signaling diagram of communication between the AP 101 and the UE 102. In the example of FIG. 10, the UE 102 does not delegate management of its resource budget 752 to the AP 101. The UE 102 manages the resource budget 752 of the DC restriction imposed on the UE 102. The AP 101 does not manage the resource budget 751.

In the example of FIG. 10, at 941, the AP 101 transmits a request signal 841 to the UE 102. Based on the request signal 841, the UE 102 transmits a transmission grant signal 842, at 942. The request signal 841 is transmitted based on the UE 102 managing the resource budget 752. For example, if the balance of the resource budget 752 is low, the UE 102 could refrain from transmitting the grant signal 821. In the scenario of FIG. 10, there are sufficient available TTRs in the resource budget 752 and the UE 102 transmits the transmission grant signal 821 that is giving the AP 101 the permission to transmit, at 943, data 811 using TTRs from the resource budget 752. The UE 102 accordingly updates the balance of the resource budget 752.

For example, it would be possible that the transmission grant 821 is indicative of one or more channels and/or one or more transmit properties and/or an amount of the TTRs for which the transmission of the AP 101 using the TTRs is granted. This may facilitate estimating the amount of required TTRs at the UE 102.

As illustrated in FIG. 10, the UE 102 can transmit data 812 using TTRs from the resource budget 752 at 944 without seeking prior approval by the AP 101. This is because the UE 102 stays in charge of management of the resource budget 752 in the scenario FIG. 10.

At 945, the AP 101 may optionally transmit data 811 using TTRs from its own resource budget 751, which corresponds to action/signaling at 934, 924 and 915.

While in the scenario of FIG. 10 the AP 101 uses the transmission grant signal 821 to transmit the data 811 at 943, in some scenarios it would even be possible that the AP 101 forwards the transmission grant signal, e.g., to the UE 103 (not illustrated in FIG. 10). For example, the transmission grant signal 821 could be indicative of whether the transmission grant signal 821 can be forwarded to another node different from the AP 101. It would also be possible that the transmission grant signal 821 is indicative of whether the AP 101 is allowed to transmit using the TTRs from the resource budget 752 with another node such as the UE 103.

While in the scenario FIG. 10 the AP 101 pre-emptively requests permission to use the TTRs from the resource budget 752, it would also be possible to implement a monitoring scenario as explained in connection with FIG. 8 and FIG. 9: here, the UE 102 may remain in charge of management of the resource budget 752, but the AP 101 may be allowed to proactively transmit using TTRs from the resource budget 752, e.g., until the UE 102 transmits a status signal that is indicative of at least one of a suspension or a backoff time duration for transmission of the AP 101 using TTRs from the resource budget 752.

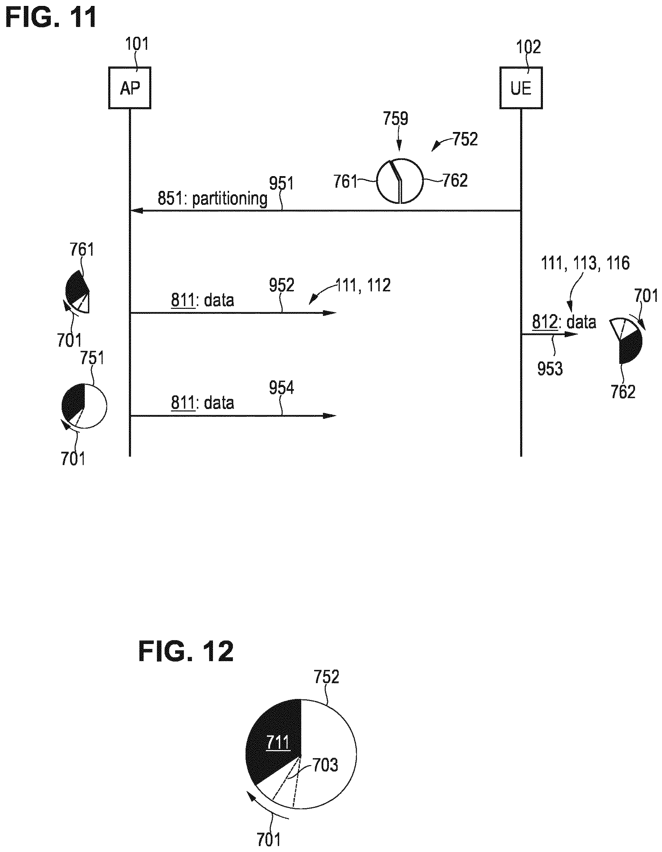

FIG. 11 is a signaling diagram of communication between the AP 101 and the UE 102. In the example of FIG. 11, the UE 102, at 951, transmits a partitioning signal 851 to the AP 101. The partitioning signal 851 is indicative of a partitioning 759 of the resource budget 752 associated with the DC restriction imposed on the UE 102.

Then, at 952, the AP 101 can transmit on one of its communication links 111, 112 using TTRs from the part 761 of the partitioning 759. The AP 101 manages the part 761 of the partitioning 759, while the UE 102 manages the part 762 of the partitioning 759. While the AP 101 is not allowed to use TTRs from the part 762 managed by the UE 102, the UE 102 vice versa is not allowed to use TTRs from the part 761 managed by the AP 101. The UE 102, at 953, transmits data 812 using TTRs from its part 762. 954 corresponds to 945.

As will be appreciated from the above, there are various options available for managing the at least partly re-allocated resource budget. For example, management can be at least partly retained at the node having the respectively associated DC restriction imposed thereon. It would also be possible to at least partly delegate the management to a node to which the resource budget is at least partly re-allocated. Irrespective of the particular node(s) managing the resource budget, it would be possible to apply a scaling when re-allocating at least a part of the resource budget. A corresponding scenario is illustrated in FIG. 12.

FIG. 12 illustrates aspects with respect to updating a balance 771 of the resource budget 752 that is at least partly re-allocated from the UE 102 to the AP 101. As illustrated in FIG. 12, the balance 711 is reduced by a certain part 701 of the overall budget 752. While the actual amount of used TTRs would only result in a smaller reduction to a value 703 of the balance 711, a scaling is applied to the balance 711 when the AP 101 uses TTRs from the resource budget 752. This scaling corresponds to a penalty being applied to the balance 711, because the balance 711 is reduced more than would be expected based on the used TTRs. It would also be possible to apply a scaling that provides a bonus when using reallocated TTRs.

Such scaling may be applied by the AP 101 when managing the part 761 of the partitioning 759 or when managing the entire resource budget 752 (cf. FIGs. 7-9 and 11).

The scaling may be applied by the UE 102 when managing the part 762 of the partitioning 759 or when managing the entire resource budget 752 (cf. FIGs. 10 and 11).

Summarizing, above at least the following examples have been described:

### FIRST EXAMPLE:

Implicit sharing of TTRs over a reciprocal communication link or a paired frequency band for communication between two nodes: TTRs are counted for any transmission, meaning at least one node manages the balance of TTRs of the shared resource budget, even if the actual transmitting node has been allowed not to count its TTRs for a transmission (cf. FIG. 7: 914; FIG. 10: 943, etc..)

This example can be based on a capability signaling that indicates that a node supports TTR sharing, e.g., a DC-restricted UE may be able to perform transmissions without counting TTRs, based on a grant from the device it communicates with.

A dedicated transmission grant signal could be transmitted from the AP to the UE, when the AP allows this method. The grant signal may indicate specific signal types or channels for which the UE is allowed to transmit using TTRs without counting the TTRs (cf. FIG. 7, grant signal 822). Examples could be that a UE is allowed to perform random access, or to transmit certain control signals or reference signals without counting its TTRs.

In this example, a DC-restricted UE may be able to perform transmissions with a scaled TTR counting, based on a grant from the node it communicates with. The scaled TTR counting means that only a fraction of the actual transmission time is accounted for. Since all TTRs still needs to be accounted for in the complete system it should be noted that scaling can be applied to two or more nodes in the system so that the sum of all used scaling is more than or equal to 1. One reason for the sum of the scaling to be more than one is to avoid extensive resource sharing, and therefore there may be an overhead applied (penalty). E.g., if the transmitting node and the receiving node of a communication link both apply scaling with 110%, the total will be more than 1, enabling this function when needed, but there will be a certain penalty of using it.

### SECOND EXAMPLE

In this example, a similar transmission grant signal is assumed as in the first example. In this example, a DC-restricted node shall be able to count TTRs while receiving, based on dedicated signaling with the transmitting device. This means that it's the receiving node that consumes the TTRs even though another node is actually transmitting on the communication link (cf. FIG. 8). This may include a signaling from the node managing the resource budget (the receiving node) to the transmitting node to communicate that all TTRs are used and the transmission needs to stop (cf. FIG. 8, stop signal 821). Also TTR status signal indicative of a current balance could be signaled (e.g. based on a request from the transmitting node or in accordance to a schedule) prior to the situation where the balance runs low.

This example may include a control signaling that a certain transmit property - e.g., a certain data rate - is desired. This helps to enforce a certain TTR use rate, e.g., TTRs/hour to meet a certain spectral efficiency target. For example, the transmit property may include modulation scheme or coding scheme, since e.g. a higher modulation or less coding means fewer TTRs for a given amount of data.

Also in this scenario the balance may be updated using a scaling factor different from 1.

### THIRD EXAMPLE:

Here, an explicit sharing over a reciprocal communication link is implemented. A DC restricted node can give TTRs explicitly to another node (cf. FIG. 10, grant signal 842). These TTRs may be limited in the sense that they are dedicated to be used for the reciprocal communication link. In this scenario, based on optional capability signaling, a UE can transfer its TTRs to the AP. Signaling-wise this could be implemented in the following example steps: (i) UE indicates its capability to partially or fully re-allocate TTRs; (ii) The AP may transmit a query to the UE, to get information about the available TTRs for the UE, i.e., a query for a status signal indicative of the current balance of the resource budget. The UE responds with the status signal. The AP can then transmit a TTR re-allocation request to a UE. This request signal could include an amount of intended TTR resources to be re-allocation. The UE responds with a TTR sharing accept, to acknowledge the TTR re-allocation. The UE alternatively responds with a reject.

When re-allocating resources, there may be a penalty factor to reduce the effectively available TTRs when they are at least partly re-allocated. The reason for this penalty (reduction) when re-allocating TTRs from one node to another node could be motivated by the fact that effectively one node may use more TTRs than the general DC restrictions and this could cause additional interference from that node. Another reason for the penalty is to avoid extensive signaling for resource re-allocation (control signaling overhead), and therefore there is a penalty applied to each re-allocation.

### FOURTH EXAMPLE:

Here, an explicit sharing over non-reciprocal communication link is implemented. A DC restricted node shall re-allocate TTRs explicitly to another node which TTRs can be used in communication over a non-reciprocal communication link or for communication with a third device or a paired frequency-band, i.e., two frequency bands for communication from a first node to a second node and vice versa. When re-allocating the TTRs, there may again be a penalty factor for each step.

In the above description of the FIRST EXAMPLE through FOURTH EXAMPLE, parameters have been discussed, such as the scaling factor for combined management and the penalty factor for re-allocating TTRs between nodes. Values for these parameters could e.g. be defined as fixed values in standards or in regulation documents for unlicensed spectrum usage. Alternatively, a node may dynamically configure and broadcast values of the parameters to further nodes.

For illustration, above various examples have been described in which a resource budget associated with a DC restriction is re-allocated between a UE and an AP. Similar examples may be readily applied to other kinds and types of nodes. For example, a re-allocation between two UEs or two APs would be possible.

For illustration, above various examples have been described in connection with the first node managing the resource budget associated with a spectrum access restriction imposed on the second node. Similar examples may also be implemented for scenarios in which the second node stays in charge of the management of the resource budget. For example, it would be possible that the second node transmits a status signal indicative of the balance of the resource budget to the first node. The second node may monitor the transmission of the first node using transmit time resources from the resource budget.

For further illustration, it would even be possible to implement scenarios where both the first node and the second node manage the resource budget contemporaneously (i.e., without partitioning being applied). Here, a status signal exchanged between the first node and the second node may be helpful to align the balance. To avoid unintentional overdrawing of the budget, it would be possible to apply a penalty scaling factor at each node managing the resource budget.

For further illustration, various examples have been described which employ LBT procedures. The LBT procedures are generally optional.

## Claims

1. A method of operating a first node (101), comprising:
- at least partly re-allocating a resource budget (700, 752) associated with a spectrum access restriction imposed on a second node (102) from the second node (102) to the first node, and
- transmitting on a communication link (111, 112) using transmit time resources from the resource budget (700, 752).

2. The method of claim 1, further comprising:
- exchanging, between the first node (101) and the second node (102), a status signal (821, 822, 842) indicative of a balance (711) of the resource budget (700, 752).

3. The method of claim 2, further comprising:
- managing the resource budget (700, 752) at the first node (101).

4. The method of claim 3,
wherein said managing of the resource budget (700, 752) comprises:
- monitoring transmission of the second node (102) using further transmit time resources from the resource budget (700, 752).

5. The method of claim 2, further comprising:
wherein said exchanging of the status signal comprises:
- receiving, from the second node (102), the status signal (842) indicative of the balance (711) of the resource budget,
wherein the status signal is indicative of a transmission grant for the transmit time resources based on the second node (102) managing the resource budget (700, 752).

6. The method of claim 5, further comprising:
- transmitting, to the second node (102), a request,
wherein the transmission grant (842) is associated with the request.

7. The method of Claim 1, further comprising:
- exchanging, between the first node (101) and the second node (102), a signal (851) indicative of a partitioning (759) of the resource budget (700, 752),
wherein the first node (101) transmits on the communication link (111, 112) using the transmit time resources from a respective part (761) of the partitioning (759).

8. The method of any one of the preceding claims, further comprising:
- exchanging, between the first node (101) and the second node (102), a signal (801, 802) indicative of a capability to re-allocate the resource budget (700, 752) from the second node (102) and to the first node (101).

9. The method of any one of the preceding claims, further comprising:
- applying a scaling to a balance (711) of the resource budget (700, 752) when using the transmit time resources from the resource budget (700, 752).

10. The method of claim 9,
wherein the scaling is associated with penalty to the balance (711).

11. A method of operating a second node (102), **characterised by**:
- transmitting, to a first node (101), a signal (851) indicative of a partitioning (759) of a resource budget (700, 752) associated with a spectrum access restriction imposed on the second node (102),
wherein the signal is indicative of a transmission grant for the first node to transmit using transmit time resources from the resource budget.

12. A first node (101) comprising control circuitry, the control circuitry being configured to:
- at least partly re-allocate a resource budget (700, 752) associated with a spectrum access restriction imposed on a second node (102) from the second node (102) to the first node, and
- transmit on a communication link (111, 112) using transmit time resources from the resource budget (700, 752).

13. A second node comprising control circuitry, the control circuitry is **characterised by** being configured to:
- transmit, to a first node (101), a signal (851) indicative of a partitioning (759) of a resource budget (700, 752) associated with a spectrum access restriction imposed on the second node (102), wherein the signal is indicative of a transmission grant for the first node to transmit using transmit time resources from the resource budget.

## Patentansprüche

1. Verfahren zum Betreiben eines ersten Knotens (101), umfassend:
- mindestens teilweises Neuzuweisen eines Ressourcenbudgets (700, 752), das einer einem zweiten Knoten (102) auferlegten Spektrumszugangsbeschränkung zugeordnet ist, von dem zweiten Knoten (102) an den ersten Knoten, und
- Senden über eine Kommunikationsverbindung (111, 112) unter Verwendung von Sendezeitressourcen aus dem Ressourcenbudget (700, 752).

2. Verfahren nach Anspruch 1, ferner umfassend:
- Austauschen, zwischen dem ersten Knoten (101) und dem zweiten Knoten (102), eines Statussignals (821, 822, 842), das einen Saldo (711) des Ressourcenbudgets (700, 752) anzeigt.

3. Verfahren nach Anspruch 2, ferner umfassend:
- Verwalten des Ressourcenbudgets (700, 752) am ersten Knoten (101).

4. Verfahren nach Anspruch 3,
wobei das Verwalten des Ressourcenbudgets (700, 752) umfasst:
- Überwachen des Sendens des zweiten Knotens (102) unter Verwendung weiterer Sendezeitressourcen aus dem Ressourcenbudget (700, 752).

5. Verfahren nach Anspruch 2, ferner umfassend:
wobei das Austauschen des Statussignals umfasst:
- Empfangen, von dem zweiten Knoten (102), des Statussignals (842), das den Saldo (711) des Ressourcenbudgets angibt,
wobei das Statussignal eine Sendegewährung für die Sendezeitressourcen darauf basierend anzeigt, dass der zweite Knoten (102) das Ressourcenbudget (700, 752) verwaltet.

6. Verfahren nach Anspruch 5, ferner umfassend:
- Senden einer Anforderung an den zweiten Knoten (102),
wobei die Sendegewährung (842) der Anforderung zugeordnet ist.

7. Verfahren nach Anspruch 1, ferner umfassend:
- Austauschen, zwischen dem ersten Knoten (101) und dem zweiten Knoten (102), eines Statussignals (851), das eine Partitionierung (759) des Ressourcenbudgets (700, 752) anzeigt,
wobei der erste Knoten (101) auf der Kommunikationsverbindung (111, 112) unter Verwendung der Sendezeitressourcen aus einem jeweiligen Teil (761) der Partitionierung (759) sendet.

8. Verfahren nach einem der vorstehenden Ansprüche, ferner umfassend:
- Austauschen, zwischen dem ersten Knoten (101) und dem zweiten Knoten (102), eines Signals (801, 802), das eine Fähigkeit anzeigt, das Ressourcenbudget (700, 752) von dem zweiten Knoten (102) und zu dem ersten Knoten (101) neu zuzuweisen.

9. Verfahren nach einem der vorstehenden Ansprüche, ferner umfassend:
- Anwenden einer Skalierung auf einen Saldo (711) des Ressourcenbudgets (700, 752) bei Verwendung der Sendezeitressourcen aus dem Ressourcenbudget (700, 752).

10. Verfahren nach Anspruch 9,
wobei die Skalierung einer Strafe für den Saldo (711) zugeordnet ist.

11. Verfahren zum Betreiben eines zweiten Knotens (102), **gekennzeichnet durch:**
- Senden, an einen ersten Knoten (101), eines Signals (851), das eine Partitionierung (759) eines Ressourcenbudgets (700, 752) anzeigt, das einer Spektrumszugriffsbeschränkung zugeordnet ist, die dem zweiten Knoten (102) auferlegt wird,
wobei das Signal eine Sendegewährung für den ersten Knoten anzeigt, um unter Verwendung von Sendezeitressourcen aus dem Ressourcenbudget zu senden.

12. Erster Knoten (101), umfassend einen Steuerschaltkreis, wobei der Steuerschaltkreis konfiguriert ist zum:
- mindestens teilweisen Neuzuweisen eines Ressourcenbudgets (700, 752), das einer einem zweiten Knoten (102) auferlegten Spektrumszugangsbeschränkung zugeordnet ist, von dem zweiten Knoten (102) an den ersten Knoten, und
- Senden über eine Kommunikationsverbindung (111, 112) unter Verwendung von Sendezeitressourcen aus dem Ressourcenbudget (700, 752).

13. Zweiter Knoten, der einen Steuerschaltkreis umfasst, wobei der Steuerschaltkreis **dadurch gekennzeichnet ist, dass** er konfiguriert ist zum:
- Senden, an einen ersten Knoten (101), eines Signals (851), das eine Partitionierung (759) eines Ressourcenbudgets (700, 752) anzeigt, das einer dem zweiten Knoten (102) auferlegten Spektrumszugangsbeschränkung zugeordnet ist, wobei das Signal eine Sendegewährung für den ersten Knoten zum Senden unter Verwendung von Sendezeitressourcen aus dem Ressourcenbudget anzeigt.

## Revendications

1. Procédé de fonctionnement d'un premier nœud (101), comprenant :
- le fait de réallouer au moins partiellement un budget de ressources (700, 752) associé à une restriction d'accès au spectre imposée sur un second nœud (102) du second nœud (102) vers le premier nœud, et
- la transmission sur une liaison de communication (111, 112) à l'aide de ressources temporelles de transmission provenant du budget de ressources (700, 752).

2. Procédé selon la revendication 1, comprenant en outre :
- l'échange, entre le premier nœud (101) et le second nœud (102), d'un signal de statut (821, 822, 842) indiquant un solde (711) du budget de ressources (700, 752).

3. Procédé selon la revendication 2, comprenant en outre :
- la gestion du budget de ressources (700, 752) au niveau du premier nœud (101).

4. Procédé selon la revendication 3,
dans lequel ladite gestion du budget de ressources (700, 752) comprend :
- la surveillance de transmission du second nœud (102) à l'aide de ressources temporelles de transmission supplémentaires provenant du budget de ressources (700, 752).

5. Procédé selon la revendication 2, comprenant en outre :
dans lequel ledit échange du signal de statut comprend :
- la réception, en provenance du second nœud (102), du signal de statut (842) indiquant le solde (711) du budget de ressources,
dans lequel le signal de statut indique une autorisation de transmission pour les ressources temporelles de transmission en fonction du second nœud (102) gérant le budget de ressources (700, 752).

6. Procédé selon la revendication 5, comprenant en outre :
- la transmission, au second nœud (102), d'une demande,
dans lequel l'autorisation de transmission (842) est associée à la demande.

7. Procédé selon la revendication 1, comprenant en outre :
- l'échange, entre le premier nœud (101) et le second nœud (102), d'un signal (851) indiquant un partitionnement (759) du budget de ressources (700, 752),
dans lequel le premier nœud (101) transmet sur la liaison de communication (111, 112) à l'aide des ressources temporelles de transmission à partir d'une partie respective (761) du partitionnement (759).

8. Procédé selon l'une quelconque des revendications précédentes, comprenant en outre :
- l'échange, entre le premier nœud (101) et le second nœud (102), d'un signal (801, 802) indiquant une capacité pour réallouer le budget de ressources (700, 752) à partir du second nœud (102) et vers le premier nœud (101).

9. Procédé selon l'une quelconque des revendications précédentes, comprenant en outre :
- l'application d'une mise à l'échelle à un solde (711) du budget de ressources (700, 752) lors de l'utilisation des ressources temporelles de transmission provenant du budget de ressources (700, 752).

10. Procédé selon la revendication 9,
dans lequel la mise à l'échelle est associée à une pénalité sur le solde (711).

11. Procédé de fonctionnement d'un second nœud (102), **caractérisé par :**
- la transmission, à un premier nœud (101), d'un signal (851) indiquant un partitionnement (759) d'un budget de ressources (700, 752) associé à une restriction d'accès au spectre imposée sur le second nœud (102),
dans lequel le signal indique une autorisation de transmission pour permettre au premier nœud de transmettre à l'aide de ressources temporelles de transmission provenant du budget de ressources.

12. Premier nœud (101) comprenant un système de circuits de commande, le système de circuits de commande étant configuré pour :
- réallouer au moins partiellement un budget de ressources (700, 752) associé à une restriction d'accès au spectre imposée sur un second nœud (102) du second nœud (102) vers le premier nœud, et
- transmettre sur une liaison de communication (111, 112) à l'aide de ressources temporelles de transmission provenant du budget de ressources (700, 752).

13. Second nœud comprenant un système de circuits de commande, le système de circuits de commande est **caractérisé en ce qu'il** est configuré pour :
- transmettre, à un premier nœud (101), un signal (851) indiquant un partitionnement (759) d'un budget de ressources (700, 752) associé à une restriction d'accès au spectre imposée sur le second nœud (102), dans lequel le signal indique une autorisation de transmission pour permettre au premier nœud de transmettre à l'aide de ressources temporelles de transmission provenant du budget de ressources.
